# EUROPÄISCHE PATENTANMELDUNG

(11) **EP 4 553 488 A1**
(43) Veröffentlichungstag der Anmeldung: **14.05.2025**
(21) Anmeldenummer: 24208839.1
(22) Anmeldetag: 25.10.2024
(51) Int. Cl.: G01N 21/39, G01J 3/42, G01N 21/3504

(54) **REDUKTION VON OPTISCHEN STÖRSIGNALEN MITTELS SCHWINGUNGSBEWEGUNGEN VON OPTISCH AKTIVEN ELEMENTEN EINES SPEKTROMETERS**

(30) Priorität: 07.11.2023 DE 102023130826
(71) Anmelder: Endress+Hauser Optical Analysis, Inc., Ann Arbor, MI 48103 (US)
(72) Erfinder: Dessecker, Jürgen, 79599 Wittlingen (DE); Ehlers, Patrick, 435 41 Mölnlycke (SE); Winter, Marc, 63571 Gelnhausen (DE); Slater, Joseph B., Dexter, MI 48130 (US)
(74) Vertreter: Endress + Hauser Group Services (Deutschland) AG+Co. KG

(57) **Zusammenfassung**

Die Erfindung betrifft ein Spektrometer, aufweisend:
(i) eine Laserlichtquelle mit kohärenter Strahlung, die einen durchstimmbaren Diodenlaser mit kohärentem Laserausgang aufweist, wobei die kohärente Laserlichtquelle ausgebildet ist, um die Frequenz des kohärenten Laserausgangs zu modulieren;
(ii) einen Photodetektor, welcher derart angeordnet ist, dass er die kohärente Strahlung vom Laserausgang nach dem Durchgang einer Weglänge empfängt;
(iii) mindestens eine optisch wirksame Oberfläche, bevorzugt ein erstes optisches Element, welche
entlang der Weglänge zwischen dem Laserausgang und dem Photodetektor angeordnet ist,
und
(iv) eine Auswerteeinheit, die mit dem Photodetektor elektrisch verbunden wird,
dadurch gekennzeichnet, dass
die Laserlichtquelle und/oder
das erste optische Element auf einem beweglichen Träger montiert ist,
wobei die Bewegung des Trägers eine

Schwingungsbewegung mit einer Amplitude und/oder Frequenz ist und die Weglänge der Strahlung derart ändert, dass Störsignale, welche an dem mindestens einen optischen Element als optische Interferenz durch die Überlagerung von Strahlen unterschiedlicher optischer Pfadlänge durch die zumindest Teilreflektion an mindestens einer optischen Oberfläche entstehen, unterdrückt werden, wobei die Unterdrückung durch Interferenz zwischen der aus der Lichtquelle ausgestrahlten Strahlung und Änderung der Weglänge des Strahlengangs aufgrund der Bewegung auf dem beweglichen Träger erfolgt.

## Beschreibung

Diese Erfindung bezieht sich im Allgemeinen auf die verbesserte Detektion von Gasen, die zum Beispiel für die Überwachung der Umweltatmosphäre, der gebildeten Gase in einer Kläranlage, bei der Prozessüberwachung, -kontrolle und -steuerung, Qualitätssicherung in der Gasförderung sowie in industriellen Prozessen, in denen Gase gebildet werden sowie beim Transport von Gasen verwendet werden. Insbesondere bezieht sich diese Erfindung auf Verbesserungen bei der Detektion und Messung von Gaskonzentrationen und Gasemissionen auf der Basis von abstimmbaren Diodenlasern.

Es ist bekannt, dass die Nachweisempfindlichkeit der TDL-WMS (tunable diode laserwavelength modulation spectroscopy) Spektroskopie durch Interferenzstreifen und nicht durch die theoretische Grenze, die durch das Detektorrauschen gegeben ist, begrenzt wird. Die Interferenzstreifen entstehen durch Fabry-Perot-Etalons zwischen reflektierenden oder streuenden Oberflächen optischer Elemente, Endflächen von Glasfasern und Komponenten von Multipass-Zellen. Eine erste quantitative Analyse der Auswirkungen von Interferenzstreifen auf die Nachweisempfindlichkeit wurde durch Reid *et al.* (Reid et al, Optical and quantum electronics, Vol. 17, 1985) durchgeführt. In ihrer Studie schätzten die Autoren, dass sie die Erkennungsempfindlichkeit um mindestens einen Faktor 5 verbessern könnten, wenn sie die Interferenzstreifen beseitigen könnten.

Schwingungsbewegung mit einer Amplitude und/oder Frequenz ändert die Weglänge der Strahlung derart, dass Störsignale, welche an dem mindestens einen optischen Element als optische Interferenz durch die Überlagerung von Strahlen unterschiedlicher optischer Pfadlänge durch die Teilreflektion an mindestens einer optischen Oberfläche entstehen, unterdrückt werden, wobei die Unterdrückung durch Interferenz zwischen der aus der Lichtquelle ausgestrahlten Strahlung und Änderung der Weglänge des Strahlengangs aufgrund der Bewegung der optischen Oberfläche auf dem beweglichen Träger erfolgt. Die Änderung der Pfadlänge erfolgt bei einer Frequenz, welche viel höher ist als die Bandbreite des gemessenen Signals.

Zusätzlich zu den optischen Streifen von optischen Kavitäten verändert jede Rückreflexion zum Laser die Lasercharakteristik. Wenn wir die Rückreflexionen bei einer Frequenz ändern können, welche viel höher sind als die Bandbreite des gemessenen Signals, können auch die durch die Rückflexion entstandenen Effekte herausgefiltert werden. Das gefilterte bzw. angepasste Signal entspricht somit mehr dem tatsächlichen Signal als wenn die Unterdrückung nicht angewendet wird.

Die Aufgabe gemäß der erfindungsgemäßen Vorrichtung und des erfindungsgemäßen Verfahrens ist demnach die Bereitstellung einer gegenüber dem Stand der Technik robusteren und vereinfachten Vorrichtung und des entsprechenden Verfahrens, um Störsignale durch optische Interferenz durch die Überlagerung von Strahlen unterschiedlicher optischer Pfadlänge durch die zumindest Teilreflektion an mindestens einer optischen Oberfläche zu unterdrücken.

Die Aufgabe wird gelöst durch
ein Spektrometer, aufweisend:
   (i) eine Laserlichtquelle mit kohärenter Strahlung, die einen durchstimmbaren Diodenlaser mit kohärentem Laserausgang aufweist, wobei die kohärente Laserlichtquelle ausgebildet ist, um die Frequenz des kohärenten Laserausgangs zu modulieren;
   (ii) einen Photodetektor, welcher derart angeordnet ist, dass er die kohärente Strahlung vom Laserausgang nach dem Durchgang einer Weglänge empfängt;
   (iii) mindestens eine optische Oberfläche, bevorzugt ein erstes optisches Element, weiter bevorzugt ein erstes refraktives optisches Element, beispielsweise eine erste Linse oder ein erstes reflektives optisches Element, beispielsweise ein Spiegel, welche
      entlang der Weglänge zwischen dem Laserausgang und dem Photodetektor angeordnet ist,
      und
   (iv) eine Auswerteeinheit, die mit dem Photodetektor elektrisch verbunden wird, um Signale von dem Photodetektor zu empfangen, zu analysieren und Anweisungen an eine mit der Auswerteeinheit elektrisch verbundene Steuereinheit zu übermitteln,
dadurch gekennzeichnet, dass
die Laserlichtquelle und/oder
das erste optische Element auf einem beweglichen Träger montiert ist, wobei der Träger von der Steuereinheit angetriebenen Antrieb bewegt wird,
wobei die Bewegung des Trägers eine
Schwingungsbewegung mit einer Amplitude und/oder Frequenz ist und die Weglänge der Strahlung derart ändert, dass Störsignale, welche an dem mindestens einen optischen Element als optische Interferenz durch die Überlagerung von Strahlen unterschiedlicher optischer Pfadlänge durch die zumindest Teilreflektion an mindestens einer optischen Oberfläche entstehen, unterdrückt werden, wobei die Unterdrückung durch Interferenz zwischen der aus der Lichtquelle ausgestrahlten Strahlung und Änderung der Weglänge des Strahlengangs aufgrund der Bewegung auf dem beweglichen Träger erfolgt.

Die hier vorgeschlagene Vorgehensweise zum Unterdrücken von Störsignalen wendet ein Verfahren und eine Vorrichtung für mechanische Schwingungsbewegungen von mindestens einer optisch aktiven Oberfläche, bevorzugt von mindestens einem optisch aktiven Element des Spektrometers an, welches die optische Weglänge des Strahls verändert.

Ein Vorteil der erfindungsgemäßen Vorrichtung und des erfindungsgemäßen Verfahrens liegt darin, dass die für die Schwingungsbewegungen vorgesehene optische wirksame Oberfläche, bevorzugt das optische Element ein mechanisches Bauteil ist - und nicht die Strahlungsquelle, deren Leistung vom eingespeisten Strom abhängt und somit störungsanfällig ist. Damit ist es nicht notwendig, die elektrische Verbindung zum Laser so auszuführen, dass sie von der mechanischen Bewegung unbeeinflusst bleibt. Das ist sowohl für die Messgenauigkeit als auch für die Langzeitstabilität des Systems von Vorteil.

In einer Ausführungsform weist der bewegliche Träger
einen Rotator, wobei der Rotator kleiner als 10°, bevorzugt kleiner als 2 Grad° kontinuierlich oder schrittweise um die x-, y- oder z-Achse oder einer Kombination davon drehbar ist und/oder
einen Translator auf, wobei der Translator entlang der x-, y- oder z-Achse oder einer beliebigen Kombination davon kontinuierlich oder schrittweise bewegbar ist.

In einer Ausführungsform beträgt die Amplitude ein Vielfaches,
bevorzugt ein 2-10faches der Laserwellenlänge, wobei bevorzugt die Amplitude 0,5 µm bis 50
µm, bevorzugt 1 µm bis 10 µm beträgt.

In einer Ausführungsform verläuft die Bewegung des Trägers zeitlich sinusförmig, sägezahnförm ig,
dreiecksförmig oder rechteckig und/oder unterdrückt Störsignale bei Frequenzen zwischen 1 und 200
kHz.

In einer Ausführungsform liegt die Frequenz der Bewegung des Trägers größer als 1 kHz, bevorzugt, 1
bis 200 kHz, weiter bevorzugt zwischen 2 kHz und 100 kHz, noch weiter bevorzugt zwischen 2 kHz und
50 kHz.

Spektrometer nach einem den vorangegangenen Ansprüchen, wobei die Wellenlänge der Laserlichtquelle zwischen dem mittleren Infrarotbereich und dem sichtbaren Bereich, bevorzugt zwischen 380 nm und kleiner 6000 nm, weiter bevorzugt zwischen 380 nm bis 3000 nm liegt.

In einer Ausführungsform weist der Spektrometer ein, zwei, drei, vier oder fünf optische Elemente, bevorzugt vier oder fünf optische Elemente auf.

In einer Ausführungsform ist ein optisches Element ein erstes optisches Element, welches entlang der Weglänge vom Laserausgang zum Photodetektor unmittelbar hinter der Laserlichtquelle angeordnet ist oder das erste optische Element entlang dieser Weglänge darstellt.

In einer bevorzugten Ausführungsform ist ein optisches Element ein erstes refraktives Element. In einer weiteren Ausführungsform ist ein optisches Element ein zweites oder drittes refraktives Element.

In einer Ausführungsform weist der Spektrometer zwei optische Elemente auf, wobei bevorzugt ein optisches Element als eine Rückreflektoranordnung mit mindestens einem Reflektorelement oder einem Cross-Stack in dem Pfad zwischen dem Laser und dem Photodetektor ausgebildet ist, wobei die Rückreflektoranordnung fest montiert ist und somit nicht auf einem beweglichen Träger angeordnet ist.

In einer Ausführungsform ist der Spektrometer ein Absorptionsspektrometer, bevorzugt ein Laserspektrometer, weiter bevorzugt ein Diodenlaserabsorptionsspektrometer.

In einer Ausführungsform weist die Auswerteeinheit eine Messschaltung und eine Auswerteelektronik auf, welche ausgebildet ist, um
- die Frequenz des kohärenten Laserausgangs zu modulieren und
- in ein elektrisches Signal auf dem Photodetektor elektrisch umzuwandeln und zu erfassen, wobei aus dem elektrischen Signal
   a) die Konzentration mindestens eines zu analysierenden Gases und
   b) optional der Druck und/oder
   c) optional die Temperatur ermittelt werden.

In einer Ausführungsform weist die Auswerteeinheit eine Messschaltung und eine Auswerteelektronik auf, welche zusätzlich ausgebildet ist, die translatorische und/oder rotatorische Bewegungsanweisung zu ermitteln, welche an die Steuerung übermittelt wird, welche den Träger, auf dem der Laser montiert ist und/oder den Träger, auf dem die erste optische wirksame Oberfläche, bevorzugt das erste optische Element montiert ist, ansteuert, um Störsignale, welche an dem mindestens einen optischen Element als optische Interferenz durch die Überlagerung von Strahlen unterschiedlicher optischer Pfadlänge durch die zumindest Teilreflektion an mindestens einer optischen Oberfläche entstehen, zu unterdrücken

In einer alternativen Ausführungsform werden Druck und/oder Temperatur mittels eines eigens dafür im Spektrometer eingebauten Drucksensors bzw. eines Temperaturfühlers gemessen.

In einer Ausführungsform werden die Steuersignale zur Bewegung eines oder mehrerer Träger von einem Aktor in eine rotatorische und/oder translatorische Bewegung umgesetzt, wobei der Aktor aus einem Piezoaktor, einem elektromechanischem Antrieb, einem hydraulischen Antrieb und/oder einem pneumatischen Antrieb ausgewählt ist, wobei der Aktor bevorzugt ein Piezoaktor ist.

In einer Ausführungsform weist das mindestens eine optische Element eine Antireflexbeschichtung auf.

Die Erfindung betrifft weiterhin eine Analysevorrichtung zur Messung von Konzentration von mindestens einem Gas, bevorzugt einem, zwei, drei oder vier Gasen, wobei die Analysevorrichtung ein Spektrometer gemäß der Erfindung oder einer Ausführungsform davon umfasst.

Die Erfindung betrifft zudem ein Verfahren zur Unterdrückung von Störsignalen eines Spektrometers, bevorzugt eines Absorptionsspektrometers mittels durchstimmbarer Laser, bevorzugt einem Diodenlaser mit einem Spektrometer gemäß der Erfindung oder einer Ausführungsform davon, aufweisend:
- Richten eines kohärenten Laserstrahls von einer kohärenten Laserlichtquelle, die einen abstimmbaren Diodenlaser umfasst, auf einen Photodetektor entlang eines Weges mit einer Weglänge,
- Modulieren einer Frequenz des kohärenten Laserausgangs,
- Messen des optischen Signals auf dem Photodetektor, umwandeln des optischen Signals in ein elektrisches Signal und Übermitteln des elektrischen Signals des Photodetektors an eine Auswerteeinheit,
- Übermitteln einer oder mehrerer Anweisungen an eine mit der Auswerteeinheit elektrisch verbundenen Steuereinheit,
- Verändern der Weglänge des Laserstrahls durch Schwingungsbewegung durch eine translatorische und/oder rotatorische Bewegung
   eines von einer Steuereinheit angesteuerten Trägers,
   auf dem der Laser montiert ist, und/oder
   auf dem das erste optische Element montiert ist,
   wodurch die Bewegung so gewählt ist, dass Störsignale, welche an dem mindestens einer optischen Oberfläche, bevorzugt an mindestens einem optischen Element durch Streuung und/oder Reflexion entstehen, unterdrückt werden; und
- Ermittlung des elektronischen Signals des Photodetektors.

Die Erfindung betrifft zudem die Verwendung des Spektrometers gemäß der Erfindung oder einer Ausführungsform davon zur Analyse von Atmosphärengasen und/oder der Gase einer Kläranlage.

**Es zeigen:**

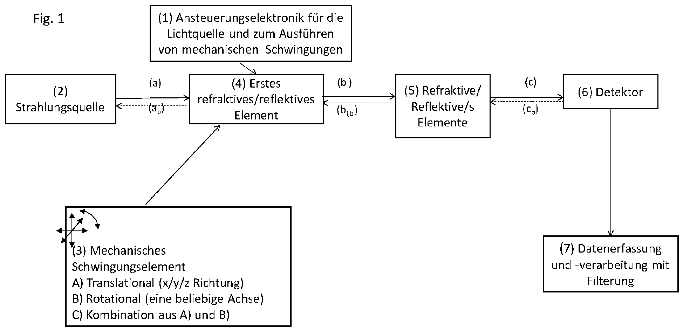

Fig. 1 eine schematisches Ablaufdiagramm der Funktionsweise einer Ausführungsform der Erfindung.

Fig. 1 zeigt den schematisch den Strahlengang eines TDL-WMS (tunable diode laserwavelength modulation spectroscopy) Spektroskopen enthaltend die Korrektur der Interferenzmuster, welche zumindest teilweise durch Rückreflexionen entstehen. Die Korrektur erfolgt mittels des ersten refraktiven Elements. Der Effekt ist eine Änderung aller Pfadlängenabschnitte, inklusive dem Abschnitt zwischen der Strahlungsquelle und dem ersten refraktiven Element.
(a) Bezeichnet den ersten Abschnitt zwischen der Strahlungsquelle (2) und dem ersten refraktiven /reflektiven Element (4).
(a_{b}) Bezeichnet die zumindest teilweise Reflexion der Strahlung zw. dem ersten refraktiven/reflektiven Element (4) und der Strahlungsquelle (2).
(bᵢ) Ein oder mehrere Abschnitte des Strahlungspfades.
(bᵢ, _{b}) Bezeichnet die zumindest teilweise Reflexion der Strahlung zw. dem zumindest einen weiteren refraktiven/reflektiven Element (5) und der Strahlungsquelle (2)
(c) Letzter Abschnitt zwischen dem letzten optischen Element (5) und dem Detektor.
(c_{b}) Bezeichnet die zumindest teilweise Reflexion der Strahlung zw. dem zumindest einen weiteren refraktiven Element, bevorzugt dem letzten refraktiven Element (5) und der Strahlungsquelle (2).

Die gestrichelten Linien zeigen zumindest teilweise Rückreflexionen in den Abschnitten a, b und c.

Alle oben beschriebenen Ausführungsformen des Inline-Sensors und des Verfahrens sind jeweils miteinander kombinierbar, sofern dies technisch möglich ist.

### Bezugszeichenliste

(1) Ansteuerungselektronik für die Lichtquelle und zum Ausführen von mechanischen Schwingungen
(2) Strahlungsquelle
(3) Mechanisches Schwingungselement
(4) Erstes refraktives/reflektives Element
(5) Refraktives/Reflektive/s Element/e
(6) Detektor
(7) Datenerfassung und -verarbeitung mit Filterung

## Patentansprüche

1. Ein Spektrometer, aufweisend:
(i) eine Laserlichtquelle mit kohärenter Strahlung, die einen durchstimmbaren Diodenlaser mit kohärentem Laserausgang aufweist, wobei die kohärente Laserlichtquelle ausgebildet ist, um die Frequenz des kohärenten Laserausgangs zu modulieren;
(ii) einen Photodetektor, welcher derart angeordnet ist, dass er die kohärente Strahlung vom Laserausgang nach dem Durchgang einer Weglänge empfängt;
(iii) mindestens eine optisch wirksame Oberfläche, bevorzugt ein erstes optisches Element, weiter bevorzugt ein erstes refraktives optisches Element, beispielsweise eine erste Linse oder ein erstes reflektives optisches Element, beispielsweise ein Spiegel, welche entlang der Weglänge zwischen dem Laserausgang und dem Photodetektor angeordnet ist,
und
(iv) eine Auswerteeinheit, die mit dem Photodetektor elektrisch verbunden wird, um Signale von dem Photodetektor zu empfangen, zu analysieren und Anweisungen an eine mit der Auswerteeinheit elektrisch verbundene Steuereinheit zu übermitteln,
**dadurch gekennzeichnet, dass**
die Laserlichtquelle und/oder
das erste optische Element auf einem beweglichen Träger montiert ist, wobei der Träger von der Steuereinheit angetriebenen Antrieb bewegt wird,
wobei die Bewegung des Trägers eine
Schwingungsbewegung mit einer Amplitude und/oder Frequenz ist und die Weglänge der Strahlung derart ändert, dass Störsignale, welche an dem mindestens einen optischen Element als optische Interferenz durch die Überlagerung von Strahlen unterschiedlicher optischer Pfadlänge durch die zumindest Teilreflektion an mindestens einer optischen Oberfläche entstehen, unterdrückt werden, wobei die Unterdrückung durch Interferenz zwischen der aus der Lichtquelle ausgestrahlten Strahlung und Änderung der Weglänge des Strahlengangs aufgrund der Bewegung auf dem beweglichen Träger erfolgt.

2. Spektrometer nach Anspruch 1, wobei der bewegliche Träger
einen Rotator, wobei der Rotator kleiner als 10°, bevorzugt kleiner als 2 Grad° kontinuierlich oder schrittweise um die x-, y- oder z-Achse oder einer Kombination davon drehbar ist und/oder
einen Translator aufweist, wobei der Translator entlang der x-, y- oder z-Achse oder einer beliebigen Kombination davon kontinuierlich oder schrittweise bewegbar ist.

3. Spektrometer nach einem der vorangegangenen Ansprüche, wobei die Amplitude ein Vielfaches, bevorzugt ein 2-10-faches der Laserwellenlänge beträgt, wobei bevorzugt die Amplitude 0,5 µm bis 50 µm, bevorzugt 1 µm bis 10 µm beträgt.

4. Spektrometer nach einem den vorangegangenen Ansprüchen, wobei die Bewegung des Trägers zeitlich sinusförmig, sägezahnförmig, dreiecksförmig oder rechteckig verläuft und/oder Störsignale bei Frequenzen zwischen 1 und 200 kHz unterdrückt.

5. Spektrometer nach Anspruch 4, wobei die Frequenz der Bewegung des Trägers größer als 1 kHz, bevorzugt, 1 bis 200 kHz, weiter bevorzugt zwischen 2 kHz und 100 kHz, noch weiter bevorzugt zwischen 2 kHz und 50 kHz liegt.

6. Spektrometer nach einem den vorangegangenen Ansprüchen, wobei die Wellenlänge der Laserlichtquelle zwischen dem mittleren Infrarotbereich und dem sichtbaren Bereich, bevorzugt zwischen 380 nm und kleiner 6000 nm, weiter bevorzugt zwischen 380 nm bis 3000 nm liegt.

7. Spektrometer nach einem der vorangegangenen Ansprüche, wobei der Spektrometer ein, zwei, drei, vier oder fünf optische Elemente, weiter bevorzugt vier oder fünf optische Elemente aufweist.

8. Spektrometer nach Anspruch 7, wobei ein optisches Element ein erstes optisches Element ist, welches entlang der Weglänge vom Laserausgang zum Photodetektor unmittelbar hinter der Laserlichtquelle angeordnet ist oder das erste optische Element entlang dieser Weglänge darstellt.

9. Spektrometer nach einem der vorangegangenen Ansprüche, wobei der Spektrometer zwei optische Elemente aufweist, wobei bevorzugt ein optisches Element als eine Rückreflektoranordnung mit mindestens einem Reflektorelement oder einem Cross-Stack in dem Pfad zwischen dem Laser und dem Photodetektor ausgebildet ist, wobei die Rückreflektoranordnung fest montiert ist.

10. Spektrometer nach einem der vorangegangenen Ansprüche, wobei der Spektrometer ein Absorptionsspektrometer, bevorzugt Laserspektrometer, weiter bevorzugt ein Diodenlaserabsorptionsspektrometer ist.

11. Spektrometer nach einem der Ansprüche 1-10, wobei die Auswerteeinheit eine Messschaltung und eine Auswerteelektronik aufweist, welche ausgebildet ist, um
- die Frequenz des kohärenten Laserausgangs zu modulieren und
- in ein elektrisches Signal auf dem Photodetektor elektrisch umzuwandeln und zu erfassen, wobei aus dem elektrischen Signal
a) die Konzentration mindestens eines zu analysierenden Gases und
b) optional der Druck und/oder
c) optional die Temperatur ermittelt wird.

12. Spektrometer nach einem der vorangegangenen Ansprüche, wobei die Steuersignale zur Bewegung eines oder mehrerer Träger von einem Aktor in eine rotatorische und/oder translatorische Bewegung umgesetzt werden, wobei der Aktor aus einem Piezoaktor, einem elektromechanischen Antrieb, einem hydraulischen Antrieb und/oder einem pneumatischen Antrieb ausgewählt ist, wobei der Aktor bevorzugt ein Piezoaktor ist.

13. Spektrometer nach einem der vorangegangenen Ansprüche, wobei das mindestens eine optische Element eine Antireflexbeschichtung aufweist.

14. Analysevorrichtung zur Messung von Konzentration von mindestens einem Gas, bevorzugt einem, zwei, drei oder vier Gasen, wobei die Analysevorrichtung einen Spektrometer nach einem der Ansprüche 1 bis 13 umfasst.

15. Verfahren zur Unterdrückung von Störsignalen eines Spektrometers, bevorzugt eines Absorptionsspektrometers mittels durchstimmbarer Laser, bevorzugt einem Diodenlaser mit einem Spektrometer nach einem der Ansprüche 1 bis 13, aufweisend:
- Richten eines kohärenten Laserstrahls von einer kohärenten Laserlichtquelle, die einen abstimmbaren Diodenlaser umfasst, auf einen Photodetektor entlang eines Weges mit einer Weglänge,
- Modulieren einer Frequenz des kohärenten Laserausgangs,
- Messen des optischen Signals auf dem Photodetektor, umwandeln des optischen Signals in ein elektrisches Signal und Übermitteln des elektrischen Signals des Photodetektors an eine Auswerteeinheit,
- Übermitteln einer oder mehrerer Anweisungen an eine mit der Auswerteeinheit elektrisch verbundenen Steuereinheit,
- Verändern der Weglänge des Laserstrahls durch Schwingungsbewegung durch eine translatorische und/oder rotatorische Bewegung eines von einer Steuereinheit angesteuerten Trägers,
auf dem der Laser montiert ist, und/oder
auf dem das erste optische Element montiert ist,
wodurch die Bewegung so gewählt ist, dass Störsignale, welche an der mindestens einen optisch wirksamen Oberfläche, bevorzugt am mindestens einem optischen Element, durch Streuung und/oder Reflexion entstehen, unterdrückt werden; und
- Ermittlung des elektronischen Signals des Photodetektors.
